# EUROPÄISCHE PATENTSCHRIFT

(11) **EP 0 530 134 B1**
(45) Veröffentlichungstag und Bekanntmachung des Hinweises auf die Patenterteilung: **06.09.1995**
(21) Anmeldenummer: 92710009.9
(22) Anmeldetag: 31.03.1992
(51) Int. Cl.: B60J 7/12

(54) **Faltverdeck für Fahrzeuge**
Foldable top for vehicles
Toit pliable pour véhicules

(30) Priorität: 24.08.1991 DE 4128115
(43) Veröffentlichungstag der Anmeldung: 03.03.1993
(73) Patentinhaber: DAIMLER-BENZ AKTIENGESELLSCHAFT, 70567 Stuttgart (DE)
(72) Erfinder: Orth, Stefan, Dipl.-Ing., W-7032 Sindelfingen (DE); Köster, Karl, Dipl.-Ing., W-7270 Nagold (DE); Claar, Klaus Peter, Dipl.-Ing., W-7268 Gechingen (DE); Schrader, Jürgen, Dipl.-Ing., W-7039 Weil im Schönbuch (DE); Cornel, Walter, W-7032 Sindelfingen (DE); Rottler, Helmut, W-7042 Aidlingen (DE); Guckel, Martin, Dipl.-Ing., W-7135 Wiernsheim (DE)

(56) Entgegenhaltungen:
- DE-C- 3 726 430
- DE-C- 3 907 227
- GB-A- 728 718
- US-A- 4 711 485

## Beschreibung

Die Erfindung bezieht sich auf ein Faltverdeck für Fahrzeuge der im Oberbegriff des Hauptanspruches angegebenen Art.

Ein derartiges Faltverdeck ist der DE-A-34 16 330 bereits als bekannt zu entnehmen, wobei die Heckscheibe eine großformatige Glasscheibe ist. Bei geschlossenem Faltverdeck weist die untere Randseite der Heckscheibe einen erheblichen Abstand zum karosserieseitigen Halteprofil des Verdeckbezuges auf, wodurch zwischen der Heckscheibe und dem Halteprofil ein relativ breiter Gewebestreifen des Verdeckbezuges aufgespannt ist. Zur querverschiebbaren Anlenkung ist die Heckscheibe über eine Führungsvorrichtung an der Karosserie angeschlagen, welche einen kniehebelartigen Querschnitt aufweist.
Beim Ablegen der Heckscheibe schwingt der obere Hebelarm der Führungsvorrichtung somit auf einer Kreisbahn um die Achse des Zwischengelenks nach unten bis er auf dem unteren Hebelarm der Führungsvorrichtung aufliegt. Damit wird die am oberen Hebelarm angelenkte Heckscheibe relativ zum Stoffhalteprofil der Karosserie nach hinten verschoben und dabei gleichzeitig näher an das Stoffhalteprofil heranbewegt, wodurch der Gewebestreifen zwischen Heckscheibe und Stoffhalteprofil entspannt und in Falten gelegt wird.

Da der Verdeckbezug infolge der Annäherung der Heckscheibe an das Stoffhalteprofil auch seitlich der Heckscheibe entspannt wird, kommt es durch den Verschiebevorgang der Heckscheibe lediglich zu einer geringfügigen Straffung der seitlich neben der Heckscheibe liegenden Gewebezonen desselben.

Um das Fahrzeugheck bei geschlossenem Faltverdeck besser übersehen zu können, wäre es an sich wünschenswert, die untere Randseite der Heckscheibe möglichst nah an das Stoffhalteprofil heranreichen zu lassen. Hierdurch verliefe jedoch die Anlenkachse der Heckscheibe bei geschlossenem Verdeck in einem entsprechend geringen Abstand oberhalb des Stoffhalteprofils, wodurch beim Öffnen des Verdecks keine nennenswerte Absenkung des unteren Scheibenrandes relativ zum Stoffhalteprofil mehr möglich wäre. Folglich fände beim Ablegen der Heckscheibe keine so weitgehende Entspannung der seitlich neben der Heckscheibe liegenden Gewebezonen statt, daß eine ausreichende Rückverschiebung der Heckscheibe unter einer Straffung dieser Gewebezonen in Fahrzeuglängsrichtung möglich wäre.

Der Erfindung liegt die Aufgabe zugrunde, ein Faltverdeck der gattungsgemäßen Art dahingehend weiterzuentwickeln, daß die untere Randseite der Heckscheibe bei geschlossenem Faltverdeck in einem relativ geringen Abstand zum Stoffhalteprofil verlaufen kann, wobei ein erheblicher Rückschiebeweg der Heckscheibe möglich bleiben soll.

Die erfindungsgemäße Lösung dieser Aufgabe ergibt sich aus den kennzeichnenden Merkmalen des Hauptanspruchs. Als querverschiebbarer Schwenkanschlag der Heckscheibe ist dabei an sich jede Drehschiebeanlenkung bekannter Art geeignet. Prinzipiell wäre es dabei denkbar, die Gewebezonen elastisch längendehnbar auszubilden, da Gewebe aus gummielastischen Fäden als solches bekannt sind.

Vorteilhafte Ausgestaltungen der Erfindung gehen aus den übrigen Ansprüchen hervor.

Um ein gleichmäßiges Erscheinungsbild des Verdeckbezuges gewährleisten zu können, bestehen die längenvariablen Gewebezonen vorzugsweise aus eingenähten Falten des Verdeckbezuggewebes.

Aus fertigungstechnischen Gründen ist es dabei vorteilhaft, wenn die Gewebefalten jeweils von einer Verbindungsnaht zwischen zwei Gewebebahnen des Verdeckbezuges ausgehen.

Eine bei geschlossenem Verdeck völlig unauffällige Anordnung der Gewebefalten läßt sich dadurch erreichen, daß der Kniff der Gewebefalten jeweils in der Verlängerung eines zugeordneten Umschlagkniffes verläuft.

Eine besonders einfache und platzsparende Anlenkung der Heckscheibe am Stoffhaltebügel ist über einen als Filmscharnier wirkenden Gewebestreifen des Verdeckbezuges selbst möglich.

Bei in einem Verdeckkasten versenkbaren Faltverdeck mit großformatiger Heckscheibe läßt sich die Heckscheibe platzsparend fast bis zum hinteren Keilende des Stoffhaltebügels verschieben, wodurch der Verdeckkasten selbst sowie die Verdeckkastenöffnung besonders schmal gestaltet sein können.

Eine entsprechend große Rückverschiebbarkeit der Heckscheibe läßt sich hierzu in einfacher Weise ermöglichen, indem der dem Umfang des Stoffhaltebügels umschließende Gewebestreifen des Verdeckbezugs unbefestigt bleibt.

Beim Rückverschieben der Heckscheibe kommt es zu einem Gleitvorgang des hinteren Rahmenteils eines die Heckscheibe einfassenden Scheibenrahmens auf dem Mittelschenkel des darunterliegenden Stoffhaltebügels. Damit hierbei Kratzbeschädigungen der aufeinander gleitenden Metallflächen sowie insbesondere das Entstehen von Reibgeräuschen verhindert werden kann, ist zur Gleitabstützung des Rahmenteils auf der Außenfläche des Stoffhaltebügels eine Gleitmittelanordnung vorgesehen. Die Gleitmittelanordnung umfaßt vorzugsweise mehrere einzelne Gleiter, die bezogen auf die Mittellängsachse des Cabriolets spiegelsymmetrisch an der Unterseite des Rahmenteils angebracht sind. Hierdurch läßt sich der Gleitvorgang gezielt auf bestimmte Gleitstellen beschränken.

Zweckmäßig bestehen die Gleiter jeweils aus einer am Rahmenteil unbeweglich befestigbaren Tragschiene, die ein Polsterelement trägt, wobei das Polsterelement als Gleitpartner mit dem Stoffhaltebügel zusammenwirkt.

Aus fertigungstechnischen Gründen ist es vorteilhaft, als Polsterelement ein extrudiertes Strangpreßprofil aus einem weichelastischen Werkstoff, wie Gummi oder dgl., zu verwenden, das durch einfaches Aufschieben auf die Tragschiene mit dieser verbindbar ist.

Um zur Anbringung der Tragschiene an einem Scheibenrahmen, der am hinteren Rahmenteil ohnehin mehrere Schraubverbindungsstellen aufweist, keine zusätzlichen Befestigungsmittel zu benötigen, können jeweils zwei Schraubverbindungsstellen am Rahmenteil gleichzeitig als Schraubbefestigungsstellen für die Tragschiene dienen.

Die Gewebefalten des Verdeckbezuges können prinzipiell allein über Spannkräfte im Gewebe des Verdeckbezugs in ihrer gestrafften Überlappungsstellung gehalten sein, solange das Verdeck geschlossen ist. Jedoch setzte dies voraus, daß die Längsspannkräfte im Verdeckbezug, deren Zugrichtung etwa parallel zu den seitlichen Rändern der Heckscheibe verläuft, wesentlich größer wären als die in Umfangsrichtung des Heckbereiches orientierten Querspannkräfte, die bestrebt sind, die Gewebefalten auseinanderzuziehen.

Um trotz weitgehend gleichmäßiger Spannkräfte im Verdeckbezug ein Aufklaffen der Gewebefalten zuverlässig zu verhindern, kann jeder Gewebefalte ein Blattfederelement zugeordnet sein, das die Gewebefalte gegen Querspannkräfte im Verdeckbezug abstützt und mit einem Ende am Scheibenrahmen der Heckscheibe und mit seinem anderen Ende am Stoffhaltebügel befestigt ist. Dabei ist das obere Ende des Blattfederelements zweckmäßig am Scheibenrahmen schraubbefestigt, wobei der Schraubbefestigungspunkt zur Vermeidung eines zusätzlichen Schraubbefestigungsmittels mit einer vorhandenen Schraubverbindungsstelle am Scheibenrahmen identisch sein kann.

Eine weitgehende Einsparung von Befestigungsmitteln in Verbindung mit einer besonders einfachen Montagemöglichkeit der Blattfederelemente ergeben sich, wenn ein unterer Endbereich der Blattfederelemente hakenförmig gebogen ist und den hinteren Profilquerschnitt des Stoffhaltebügels sichernd umgreift.

Im folgenden sind zwei Ausführungsbeispiele der Erfindung anhand einer zeichnerischen Darstellung näher erläutert.

In dieser Darstellung zeigen:
- Fig. 1: eine Seitenansicht eines Heckbereichs eines Cabriolets bei geschlossenem Faltverdeck,
- Fig. 2: eine Draufsicht auf den Verdeckkasten des Cabriolets bei abgelegtem Faltverdeck,
- Fig. 3: einen Längsschnitt durch den Verdeckkasten, gemäß der Schnittlinie III-III in Fig. 2,
- Fig. 4: eine perspektivische Ansicht des geschlossenen Faltverdecks von hinten mit einer Faltenanordnung des Verdeckbezuges,
- Fig. 5: einen Schnitt durch eine Gewebefalte der Faltenanordnung der Linie V-V in Fig. 4 entsprechend,
- Fig. 6: eine perspektivische Ansicht der Gewebefalte schräg von hinten,
- Fig. 7: einen Längsschnitt durch die teilweise heruntergeklappte Heckscheibe,
- Fig. 8: eine perspektivische Ansicht der Gewebefalte bei teilweise heruntergeklappter Heckscheibe,
- Fig. 9: eine perspektivische Ansicht der Gewebefalte bei abgelegtem Verdeck,
- Fig. 10: eine Variante des Faltverdecks in einer Ansicht des geschlossenen Verdecks von hinten mit einer Faltenanordnung im Verdeckbezug,
- Fig. 11: einen Schnitt durch einen Schraubverbindungspunkt eines: mehrteiligen Scheibenrahmens der Heckscheibe des Faltverdecks gemäß der Linie XI-XI in Fig. 10,
- Fig. 12: die Anordnung eines Gleiters am hinteren Rahmenteil des Scheibenrahmens nach Fig. 10 in einer seperaten Teilansicht,
- Fig. 13: einen Querschnitt durch den Gleiter gemäß der Linie XIII-XIII in Fig. 10,
- Fig. 14: einen Längsschnitt durch die Anordnung eines Blattfederelements bei geschlossenem Verdeck, und
- Fig. 15: den Längsschnitt nach Fig. 14 bei abgelegtem Verdeck.

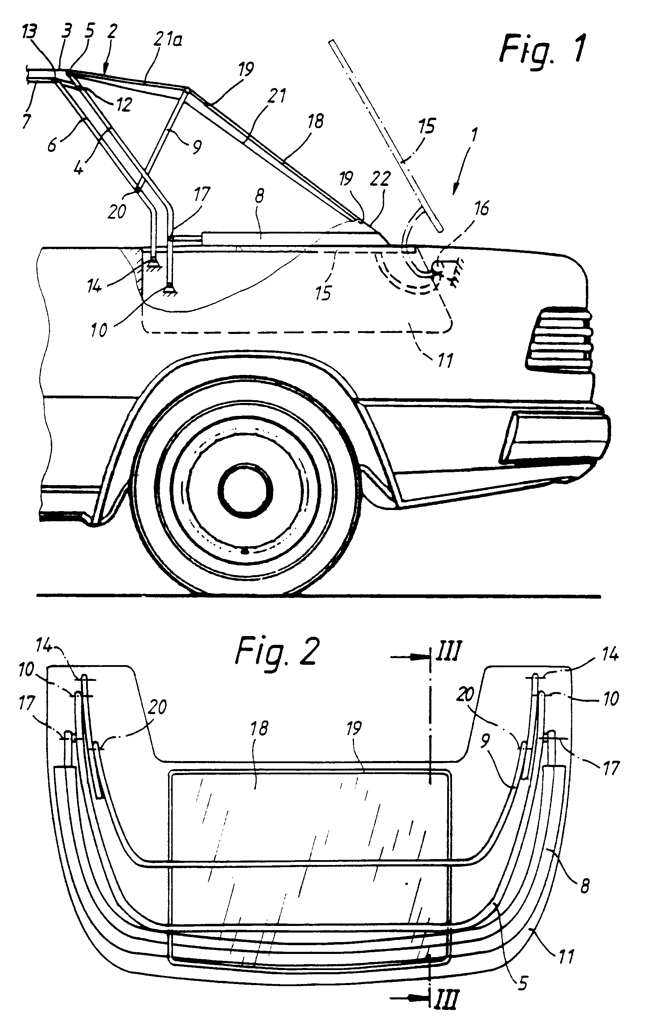

In der Seitenansicht nach Fig. 1 ist ein Heckbereich eines Cabriolets 1 mit einem versenkbaren Faltverdeck 2 zu sehen, das in üblicher Weise ein tragendes Verdeckgestell umfaßt, über welches ein flexibler Verdeckbezug 3 aus textilem Gewebe bekannter Art aufgespannt ist.

Vom bezogen auf die Längsmittelebene des Cabriolets 1 spiegelsymmetrischen Verdeckgestell sind im für die Erfindung wesentlichen hinteren Bereich eine Verdecksäule 4 eines Hauptspriegels 5, ein Hauptlenker 6, ein seitlicher Dachrahmen 7, ein Stoffhaltebügel 8 und ein Eckspriegel 9 zu sehen. Das untere Ende der Verdecksäule 4 ist über ein Hauptlager 10 im seitlichen Schenkel eines insgesamt U-förmigen Verdeckkastens 11 versenkt an der Karosserie des Cabriolets 1 angeschlagen, wodurch der Hauptspriegel 5 um eine horizontale Fahrzeugquerachse schwenkbar ist. Im oberen Endbereich der Verdecksäule 4 ist ein hinteres Ende des Dachrahmens 7 über ein Scharniergelenk 12 mit der Verdecksäule 4 verbunden. In seiner Konstruktionslage gehalten wird der Dachrahmen 7 vom zugeordneten Hauptlenker 6, dessen oberes Ende über ein Scharniergelenk 13 am Dachrahmen 7 angelenkt ist, welches sich in einem Abstand vor und dabei oberhalb des Scharniergelenks 12 befindet. Das untere Ende des Hauptlenkers 6, der etwa parallel zur Verdecksäule 4 verläuft, ist mit ähnlichem Höhenversatz über ein Scharnierlager 14 im Verdeckkasten 11 an der Karosserie angeschlagen. Somit ist der Dachrahmen 7 parallelogrammlenkerartig von Verdecksäule 4 und Hauptlenker 6 geführt.

Die nach oben gewandte Öffnung des Verdeckkastens 11 ist mittels eines formangepaßten Verdeckkastendeckels 15 geschlossen, der auf dem Öffnungsrand des Verdeckkastens 11 aufliegt und in nicht dargestellter Weise mit diesem verriegelt ist. Auf dem Verdeckkastendeckel 15 liegt der ebenfalls U-förmige Stoffhaltebügel 8 auf, welcher den unteren Abschluß des Verdecks 2 bildet und hinten den Verdeckbezug 3 haltert. Während der Verdeckkastendeckel 15 hinter dem Verdeckkasten 11 um eine karosseriefeste Achse 16 schwenkbar gelagert ist, sind die vorderen Enden der seitlichen Schenkel des Stoffhaltebügels 8 etwa auf Höhe der Bordwandoberkante über ein Scharniergelenk 17 fliegend an der zugeordneten Verdecksäule 4 gelagert. Hinten ist der Stoffhaltebügel 8 durch eine nicht dargestellte Verschlußanordnung mit dem Verdeckkastendeckel 15 verriegelt und somit in seiner dargestellten Auflagestellung niedergehalten.

Oberhalb des Stoffhaltebügels 8 ist in eine rückwärtige Fensteröffnung des Verdeckbezuges 3 eine großformatige Heckscheibe 18 eingesetzt, die in einem Scheibenrahmen 19 gehalten ist, welcher umlaufend mit dem ihn einfassenden Verdeckbezug 3 verbunden ist. Oberhalb der Heckscheibe 18 befindet sich die Eckkontur des Verdeckes 2, wo das Mittelrohr des Eckspriegels 9 stützend auf der Unterseite des Verdeckbezuges 3 anliegt. Die seitlichen Schenkel des insgesamt U-förmigen Eckspriegels 9 erstrecken sich etwa rechtwinklig zur schrägen Heckscheibenebene nach vorn unten und sind mit ihren Enden über ein Scharniergelenk 20 am zugeordneten Hauptlenker 6 angelenkt. Hierdurch ist der Eckspriegel 9 relativ zum Verdeckbezug 3 und zu den Hauptlenkern 6 schwenkbar gelagert. In seiner dargestellten Stützstellung gehalten wird der Eckspriegel 9 von zwei Gurtbändern 21 mit geringer Längendehnbarkeit, die jeweils mit einer Flanke des Eckspriegels 9 verbunden sind, sich unter dem Verdeckbezug 3 in Fahrzeuglängsrichtung erstrecken und nach vorn zum Hauptspriegel 5 und nach hinten zum Stoffhaltebügel 8 gespannt sind, wo ihre Enden jeweils befestigt sind. Ferner ist der Scheibenrahmen 19 oberhalb der Heckscheibe 18 über mehrere Gurtbänder 21a mit gleichen Dehnungseigenschaften mit dem Mittelrohr des Hauptspriegels 5 verbunden. Die ebenfalls straff gespannten Gurtbänder 21a liegen unbefestigt auf dem Mittelrohr des Eckspriegels 9 auf und verhindern, daß die Gewichtskraft der Heckscheibe 18 ausschließlich vom Verdeckbezug 3 aufgenommen werden muß.

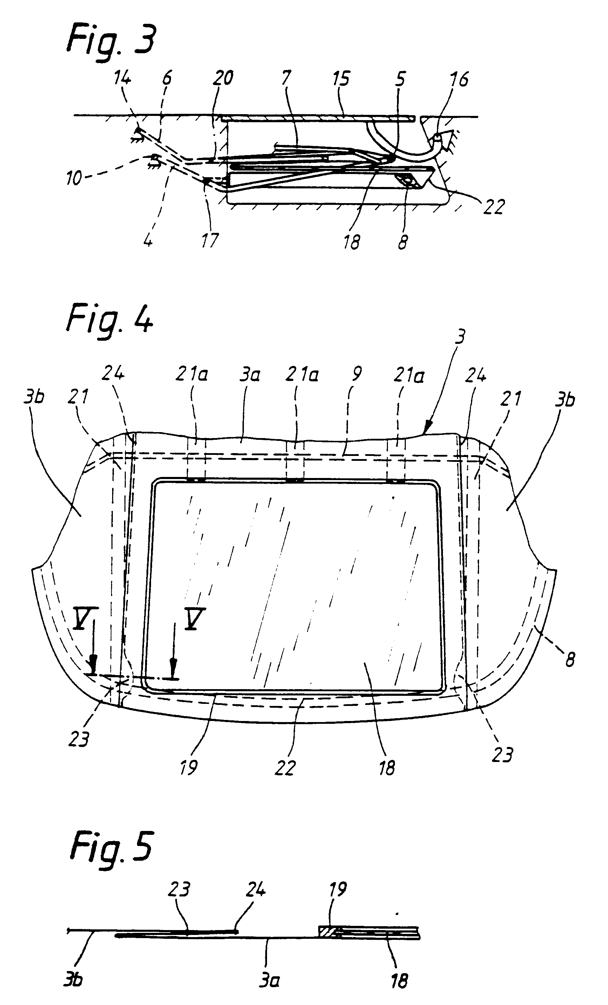

Um das Faltverdeck 2 zu öffnen, müssen zunächst vordere Verdeckverschlüsse gelöst werden, die den nicht dargestellten vorderen Dachteil mit dem Frontscheibenrahmen verbinden. Dann wird die Verriegelung des Stoffhaltebügels 8 auf dem Verdeckkastendeckel 15 gelöst und der Stoffhaltebügel 8 um das Scharniergelenk 17 der noch aufrecht stehenden Verdecksäule 4 nach vorn geschwenkt, wonach der gegenläufig angeschlagene Verdeckkastendeckel 15 freigegeben ist und nach seiner Entriegelung in die durch unterbrochene Linien angedeutete Offenstellung nach hinten hochgeschwenkt werden kann. In den geöffneten Verdeckkasten 11 läßt sich das Faltverdeck 2 um das Hauptlager 10 bis in seine abgelegte Nichtgebrauchsstellung hineinschwenken, die in Fig. 3 gezeigt ist. Hierbei wird die Heckscheibe 18 heruntergeklappt und zwischen dem Mittelrohr des Hauptspriegels 5 und dem Stoffhaltebügel 8 abgelegt, wonach sie auf der Oberseite des Stoffhaltebügels 8 aufliegt. Wie in Verbindung mit der vereinfachten Draufsicht nach Fig. 2 zu erkennen ist, ist der lichte Querschnitt des Verdeckkastens 11 im die Heckscheibe 18 aufnehmenden Mittelbereich nur geringfügig länger als die Heckscheibe 18 selbst. Dadurch ergibt sich das Erfordernis, die Heckscheibe 18 im Zuge des Versenkvorgangs des Verdecks 2 nicht nur entlang einer unterhalb der unteren Scheibenkante verlaufende Schwenkachse herunterzuklappen sondern sie zusätzlich bis zur Hinterkante des Stoffhaltebügels 8 nach hinten zu verschieben, wobei die Schwenkachse quer zu ihrer Längserstreckung mitverschoben werden muß.
Die querverschiebbare Anlenkachse wird dabei von einem schmalen Gewebestreifen 22 des Verdeckbezugs 3 selbst gebildet, der als Filmscharnier wirkt. Entlang einer Längsseite ist der Gewebestreifen 22 hierzu über den Scheibenrahmen 19 mit der unteren Randseite der Heckscheibe 18 verbunden. Mit seiner entgegengesetzten Randseite ist der Gewebestreifen 22 entlang der Unterseite des Stoffhaltebügels 8 befestigt, wobei er den formgebenden Umfang des Stoffhaltebügels 8 unbefestigt umschließt. Als formgebender Umfang wird dabei die schräge Umfangsfläche des im Querschnitt keilförmigen Stoffhaltebügelprofils angesehen, welche bei geschlossenem Verdeck 2 etwa parallel zur Neigung der Heckscheibe 18 verläuft. Beim Rückverschieben der Heckscheibe 18 relativ zum Stoffhaltebügel 8 hebt die vorher an dessen Umfang anliegende solange des Gewebestreifens 22 ab und führt die untere Randseite der Heckscheibe 18 etwa parallel zur Oberseite des Stoffhaltebügels 8 nach hinten. Auf zusätzliche Führungseinrichtungen für die untere Randseite der Heckscheibe 18 kann somit verzichtet werden.

Bei geschlossenem Verdeck 2 liegen die unteren Ecken der Heckscheibe 18 sehr nahe an der Oberseite des Stoffhaltebügels 8, so daß keine größere Absenkbewegung der unteren Randseite der Heckscheibe 18 zum Stoffhaltebügel 8 stattfinden kann. Vielmehr reicht die freie Stoffbreite des Gewebestreifens 22 gerade aus, beim Herunterklappen der Heckscheibe 8 ein zuverlässiges Filmscharnier zu bilden.

Damit es beim Rückverschieben der Heckscheibe 18 in ihre abgelegte Nichtgebrauchsstellung nicht zu partiellen Überdehnungen des Verdeckbezuges 3 kommen kann, ist dieser beidseitig der Heckscheibe 18 mit einer längenvariablen Gewebezone versehen, die beim Ablegen des Faltverdecks 2 durch die Rückverschiebung der Heckscheibe 18 relativ zum Stoffhaltebügel 8 auseinanderziehbar sind, und die beim Aufrichten des Verdecks 2 in die geschlossene Gebrauchsstellung selbsttätig wieder auf ihre Ausgangslänge verkürzbar sind.
Diese beiden Gewebezonen sind als spiegelsymmetrische Gewebefalten 23 ausgebildet, die bei geschlossenem Verdeck 2 über Spannkräfte im Verdeckbezug 3 in einer gestrafften Überlappungsstellung gehalten sind.

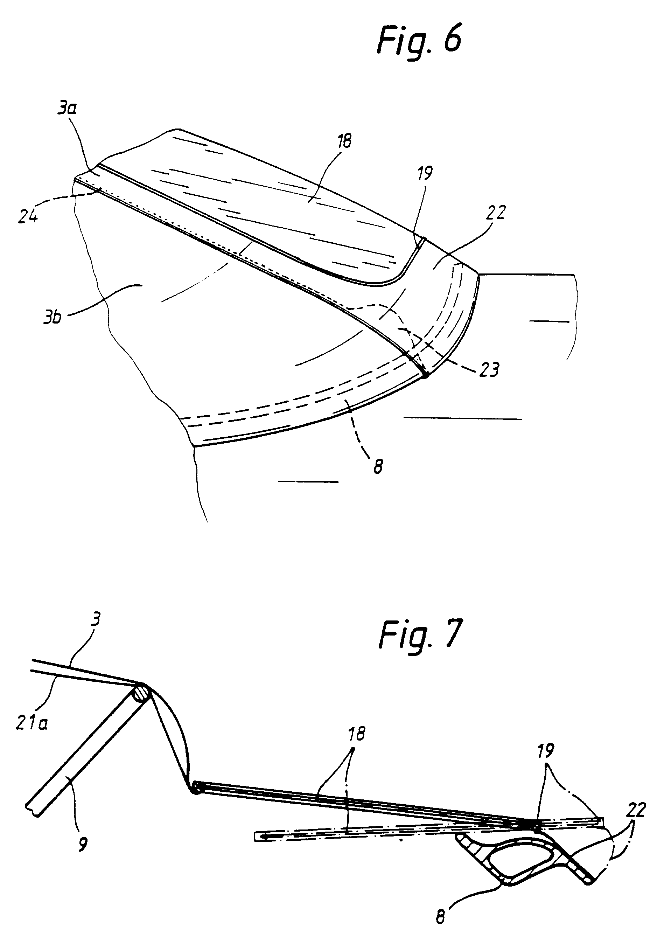

Wie in Fig. 4 sichtbar ist, befinden sich die Gewebefalten 23 jeweils in einem seitlichen Abstand zu den unteren Ecken der Heckscheibe 18, wobei sie sich in Höhenrichtung gesehen über die Breite des Gewebestreifens 22 sowie einen daran anschließenden Gewebebereich des Verdeckbezuges 3 neben dem zugeordneten Seitenrand der Heckscheibe 18 erstrecken. In Längsrichtung gesehen, also der Umfangsspannrichtung des Verdeckbezuges 3, weist die Gewebefalte 23 etwa auf Höhe der zugeordneten Scheibenecke ihre größte Faltenbreite auf, wobei die Faltenbreite nach oben und unten jeweils allmählich abnimmt.
Der Verdeckbezug 3 ist aus einer Mittelbahn 3a, welche etwas breiter als die in sie integrierte Heckscheibe 18 ist, und zwei spiegelsymmetrischen Seitenbahnen 3b zusammengesetzt. Zur Verbindung der Mittelbahn 3a mit den beiden Seitenbahnen 3b dient jeweils eine in Verdecklängsrichtung verlaufende Verbindungsnaht 24, die als Kappnaht ausgeführt ist. Dieser Nahtgestaltung entsprechend ist ein Randflächenbereich der Mittelbahn 3a wenige mm breit umgeschlagen und mit dem zugehörigen Randstreifen der Seitenbahn 3b vernäht, wodurch der Umschlag in einen scharfen Kniff gelegt ist. Der Kniff des Umschlages geht dabei gerade in einen scharfen Kniff der Gewebefalte 23 über. Hierzu gehen die Gewebefalten 23 jeweils von der zugehörigen Verbindungsnaht 24 aus, wie im Zusammenhang mit der Schnittdarstellung nach Fig. 5 sichtbar ist. Über die Höhenerstreckung der Gewebefalten 23 gesehen verläuft die ansonsten gerade Verbindungsnaht 24 unter einer bogenförmigen Krümmung, durch welche die Verbindungsnaht 24 gegenüber der Nahtlinie zurückspringt. Die gekrümmte Längenabschnitte der Verbindungsnaht 24 laufen hier aus der geraden Nahtlinie auf die Seitenränder der Heckscheibe 18 zu. Jedoch wäre es ebenfalls denkbar, dem Umschlag an der Seitenbahn 3b vorzusehen und den gekrümmten Längenabschnitt der Verbindungsnaht 24 in entgegengesetzter Richtung verlaufen zu lassen. Auch versteht es sich, daß der Zuschnitt der Gewebebahnen 3a und 3b so angepaßt werden muß, daß der angestrebte Nahtverlauf zum Erzeugen der Gewebefalten 23 möglich wird.
Wie in der perspektivischen Seitenansicht nach Fig. 6 zu erkennen ist, sind die Gewebefalten 23 bei geschlossenem Verdeck 2 kaum sichtbar. Vielmehr ist nur ein durchgehender gerader Kniff sichtbar, der erhaben auf der straff gespannten Seitenbahn 3b aufliegt und das Erscheinungsbild eines durchgehend geraden Umschlages einer üblichen Kappnaht vermittelt. Die in Längenrichtung der Verbindungsnaht 24 wirkenden Spannkräfte im Verdeckbezug 3 sichern dabei diese unauffällig aufliegenden Gewebefalten 23 in ihrer Faltstellung.

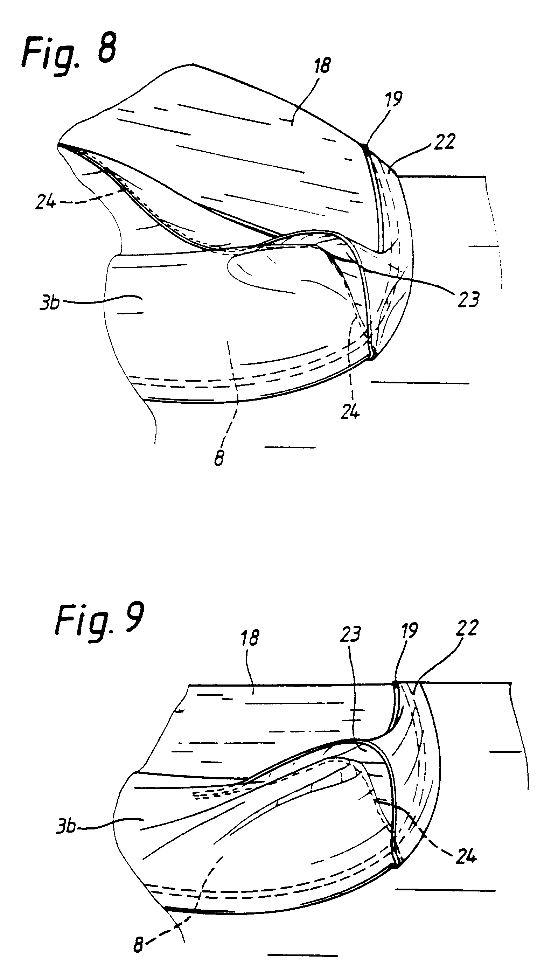

In Fig. 7 ist sichtbar, daß die Spannkräfte im Verdeckbezug 3 bei teilweise versenktem Faltverdeck 2 nicht mehr wirksam sind. Da der Stoffhaltebügel 8 um das Scharniergelenk 17 relativ zur Verdecksäule 4 auf diese zugeschwenkt wird, senkt sich die Heckscheibe 18 aufgrund ihres Eigengewichts ab und klappt um ihre vom Gewebestreifen 22 gebildetes Filmscharnier nach unten. Da die Heckscheibe 18 an ihrer oberen Randseite von den Gurtbändern 21a gehalten ist, behält sie jedoch ihre schräg nach hinten gerichtete Orientierung bei bis sie ihre Auflagestellung auf dem Stoffhaltebügel 8 erreicht hat. Hierdurch wirkt beim Versenkvorgang im Verdeckkasten 11 eine aus dem Eigengewicht der Heckscheibe 18 resultierende Kraftkomponente auf die Heckscheibe 18, welche die Rückverschiebung der Heckscheibe 18 relativ zum Stoffhaltebügel 8 unterstützt. Somit kann die Heckscheibe 18 durch manuellen Zugriff mühelos bis in ihre hintere Endlage im Verdeckkasten 11 verschoben werden.
Hierbei werden die Gewebefalten 23, wie in den Fig. 8 und 9 sichtbar ist, zunehmend auseinandergezogen, wobei sie sich in dargestellter Weise entfalten. In der Nichtgebrauchsstellung nach Fig. 9 verläuft die Nahtlinie der Verbindungsnaht 24 schließlich von oben gesehen annähernd gerade gestreckt, da die Gewebefalte 23 vollständig auseinandergezogen ist.
Wird das Faltverdeck 2 wieder geschlossen, ziehen sich die Gewebefalten 23 aufgrund der Spannkräfte im Verdeckbezug 3 selbsttätig wieder in ihre Ausgangsstellung gemäß Fig. 6 zusammen.

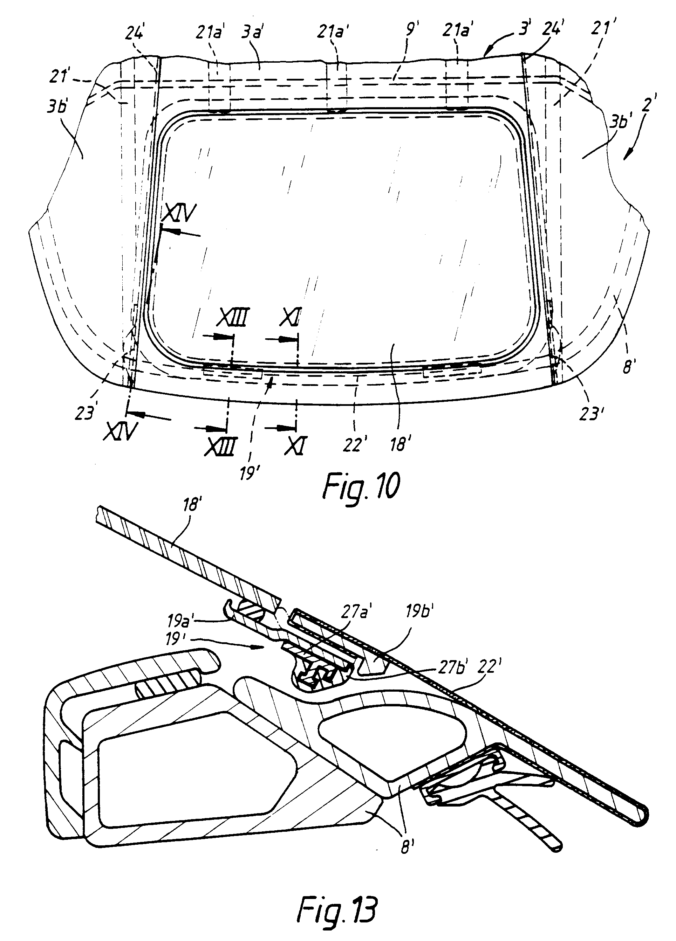

In Fig. 10 ist eine Variante zum Faltverdeck 2 zu sehen, die unter Beibehaltung des Funktionsprinzips in einigen wichtigen Details modifiziert ist, und insbesondere eine geänderte Heckscheibenanordnung aufweist.
Um Wiederholungen zu vermeiden, sind nachfolgend in der Beschreibung des Faltverdecks 2′ nur die Unterschiede zum vorher beschriebenen Verdeck 2 erläutert, wobei funktionell übereinstimmende Bauteile mit gleichen Bezugszeichen versehen und nur durch einen Strich im Exponenten kenntlich gemacht sind.

Die Heckscheibe 18′ ist in Breitenrichtung stärker gewölbt, wobei ihre untere Stirnfläche unter Anpassung an die Krümmung des Stoffhaltebügels 8′ bogenförmig gekrümmt verläuft. Sie verbreitert sich von oben nach unten trapezförmig und ihre Ecken sind unter wesentlich größeren Radien abgerundet. Der Stoffzuschnitt des Verdeckbezuges 3′ ist so modifiziert, daß die Verbindungsnähte 24′ in einem geringeren seitlichen Abstand zur Heckscheibe 18′ aber parallel zu den geraden Längenbereichen ihrer seitlichen Stirnflächen verlaufen. Die beiden Gewebefalten 23′ sind umgekehrt angeordnet, d.h. die gekrümmten Längenabschnitte der Verbindungsnähte 24′ erstrecken sich bezogen auf die gerade Nahtlinie von den Seitenrändern der Heckscheibe 18′ weg nach außen. Somit liegen die beiden Gewebefalten 23′ jeweils unterhalb der ihnen zugeordneten Seitenbahn 3b′.

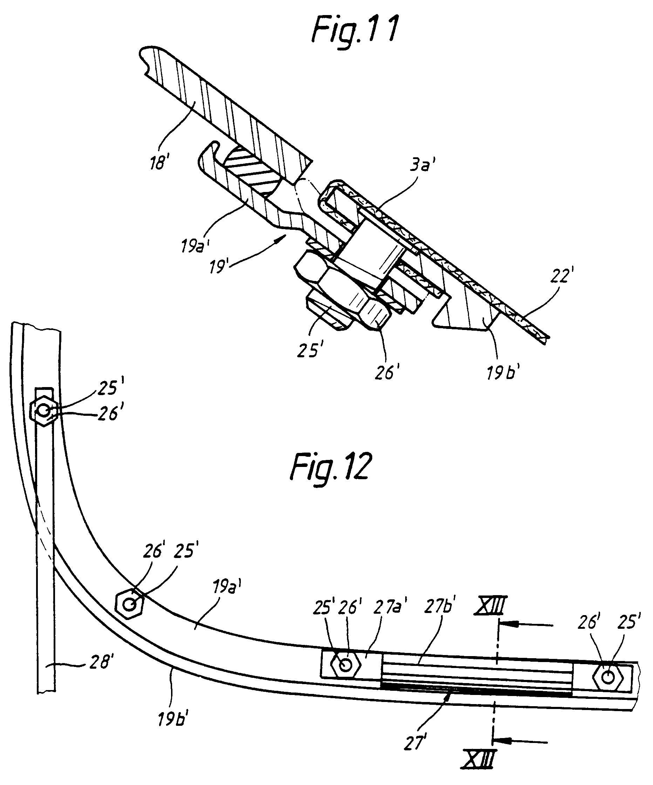

Wie im Zusammenhang mit der Schnittdarstellung nach Fig. 12 zu erkennen ist, umfaßt der Scheibenrahmen 19′ einen innenliegenden Halterahmen 19a′, in den die Heckscheibe 18′ eingeklebt ist, und einen ebenfalls umlaufenden Tragrahmen 19b′, der den Halterahmen 19a′ im Anschluß an eine Trennfuge zwischen den Stirnkanten der Heckscheibe 18′ und dem Verdeckbezug 3′ überdeckt. Zwischen den aufeinanderliegenden Flächen von Halterahmen 19a′ und Tragrahmen 19b′ ist ein an die Fensteröffnung angrenzender Stoffstreifen des Verdeckbezuges 3′, der um den Tragrahmen 19b′ herumgeschlagen ist, eingeklemmt und somit reibschlüssig gehalten. Zur Klemmbefestigung des Stoffstreifens sowie zur lösbaren Verbindung des Halterahmens 19a′ mit dem Tragrahmen 19b′ sind über die Erstreckung des Scheibenrahmens 19′ verteilt eine Vielzahl von Schraubverbindungsmittels angeordnet. Hierbei sind am Tragrahmen 19b′ eine entsprechende Anzahl Stehbolzen 25′ befestigt, die zugeordnete Durchgangsbohrungen im Halterahmen 19a′ durchsetzen. Auf das Gewinde der Stehbolzen 25′ ist jeweils eine Schraubenmutter 26′ aufgedreht und mit einem konstruktiv festgelegten Moment angezogen, um die erwünschte Klemmwirkung herbeizuführen.

Wie zeichnerisch angedeutet ist, kann zusätzlich eine umlaufende Dichtung im Klemmsitz angeordnet sein.

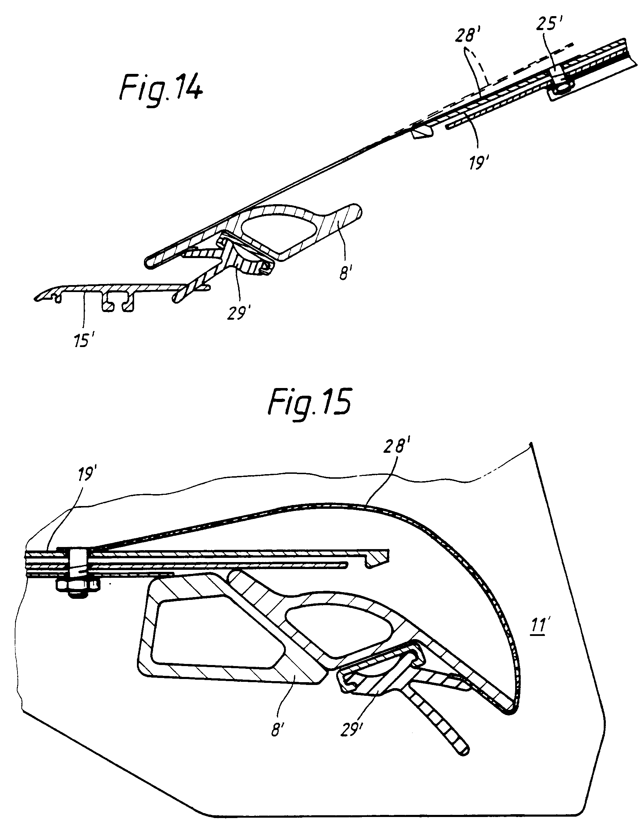

Um zu verhindern, daß der Scheibenrahmen 19′ beim Rückschiebevorgang der Heckscheibe 18′ Gleitgeräusche durch Reibung seines unteren bzw. hinteren Rahmenteils auf der Außenfläche des Stoffhaltebügels 8′ verursacht, und um Kratzbeschädigungen des Stoffhaltebügels 8′ durch die abstehenden Stehbolzen 25′ zu verhindern, sind am unteren Rahmenteil des Scheibenrahmens 19′ zwei Gleiter 27′ angeordnet, die eine entsprechend distanzierte Abstützung des Scheibenrahmens 19′ auf der Außenfläche des Stoffhaltebügels 8′ gewährleisten. Diese beiden Gleiter 27′ sind bezogen auf die Mitte der Heckscheibe 18′ seitlich versetzt und zueinander spiegelbildlich an der Unterseite des hinteren Rahmenteils angeordnet.
Wie in der Teilansicht von der Innenseite aus gemäß Fig. 12 in Verbindung mit der Schnittdarstellung nach Fig. 13 deutlich zu erkennen ist, umfaßt der Gleiter 27′ eine steife Tragschiene 27a′ aus Metall, die etwas länger ist als der Abstand zweier benachbarter Stehbolzen 25′, die aus dem Halterahmen 19a′ herausstehen. Im Abstand der benachbarten Stehbolzen 25′ voneinander ist die Tragschiene 27′ von zwei Bohrungen durchsetzt, die von den Stehbolzen 25′ mitdurchdrungen sind. Da die zugeordneten Schraubenmuttern 26′ unter Zwischenlage der Endbereiche der Tragschiene 27′ angezogen sind, ist die Tragschiene 27′ unter Nutzung ohnehin vorhandener Schraubverbindungspunkte des mehrteiligen Scheibenrahmens 19′ unter flächiger Anlage auf der Innenseite des Halterahmens 19a′ befestigt.
Von der gegenüberliegenden Breitseite der Tragschiene 27′ steht erhaben ein weichelastisches Polsterelement ab, das hier aus Gummi besteht und etwas kürzer ist als der Abstand zwischen den Schraubbefestigungspunkten der Tragschiene 27a′. Dies Polsterelement besteht aus einem Strangpreßprofil 27b und weist somit einen konstanten Querschnitt auf. Zur Verbindung des Strangpreßprofils 27b′ mit der Tragschiene 27a′ steht von der Breitseite der Tragschiene 27a′ ein Haltesteg ab, der einen Verankerungsquerschnitt z.B. in T-Form aufweist, und auf den das mit gegenstückigem lichten Querschnitt versehene Strangpreßprofil 27b′ vor der Schraubbefestigung der Tragschiene 27a′ aufschiebbar ist. Durch den Haltesteg wird darüber hinaus die Kompressibilität des Strangpreßprofils 27b′ begrenzt, so daß ein Aufsetzen der Stehbolzenenden durch zu starke Kompression des Strangpreßprofils 27b′ ausgeschlossen werden kann.

Der Verdeckbezug 3′ ist bei geschlossenem Faltverdeck 2′ weitgehend gleichmäßig gespannt, wodurch in Umfangsrichtung des Heckbereichs orientierte Querspannkräfte auf die Gewebefalten 23′ wirken.
Um trotzdem ein Aufklaffen der Gewebefalten 23′ bei geschlossenem Verdeck 2′ zuverlässig zu unterbinden, ist im Umschlag der Gewebefalten 23′ jeweils ein etwa 10 mm breites Blattfederelement 28′ angeordnet, das mit seiner der Heckscheibe 18′ zugewandten Längsseite innenseitig am Kniff der zugeordneten Gewebefalte 23′ stützend anliegt, solange das Verdeck 2′ geschlossen bleibt.

Wie im Zusammenhang mit der Schnittdarstellung nach Fig. 14, bei welcher der Verdeckbezug 3′ weggelassen wurde, deutlich erkennbar ist, weist das Blattfederelement 28′ nur eine geringe Dicke auf und ist über seine Länge geringfügig durchgebogen. Gehalten wird das Blattfederelement 28′ im oberen Endbereich über eine Schraubbefestigung am seitlichen Teil des Scheibenrahmens 19′ und im unteren Endbereich über eine Hakenverbindung zum Stoffhaltebügel 8′. Hierzu ist der untere Endbereich des Blattfederelements 28′ entsprechend verlängert und zu einer hakenförmigen Federklammer mit etwa U-förmigem Querschnitt umgebogen, der den hinteren parallelflachen Profilquerschnitt des Stoffhaltebügels 8′ im wesentlichen formschlüssig umgreift. Damit das Blattfederelement 28′ nicht erhaben auf dem Stoffhaltebügel 8′ aufliegt, kann es in einer Vertiefung desselben flächenbündig versenkt sein. Der obere Schraubbefestigungspunkt des Blattfederelements 28′ ist ein ohnehin vorgesehener Schraubverbindungspunkt des Scheibenrahmens 19′, so daß zur Anbringung des Blattfederelements 28′ keine zusätzlichen Befestigungsmittel benötigt werden. Eine unterhalb des Stoffhaltebügels 8′ verlaufende Profildichtung 29′, die bei geschlossenem Verdeck 2′ auf dem Verdeckkastendeckel 15′ aufliegt, kann jedoch einen zusätzlichen Schenkel aufweisen, der unter Vorspannung am rückwärtigen Schenkel der Federklammer anliegt und den hakenförmigen Endbereich des Blattfederelements 28′ gegen Herunterschieben vom Stoffhaltebügel 8′ sichert.

Wie in Fig. 15 sichtbar ist, biegt sich das Blattfederelement 28′ beim Ablegen des Verdecks 2′ im Verdeckkasten 11′ über seine solange erheblich durch, sobald die Heckscheibe 18′ auf den Stoffhaltebügel 8′ heruntergeklappt wird. Infolge dieser Durchbiegung wird auch der vorher an der Außenseite des Stoffhaltebügels 8 anliegende Schenkel des hakenförmigen Endbereichs des Blattfederelements 28′ abgespreizt, wobei er vom Stoffhaltebügel 8′ abhebt. Aufgrund der Abstützung seines anderen Schenkels auf der Rückseite des Stoffhaltebügels 8′ geht hierbei der Umgriff jedoch nicht verloren, sondern bleibt auch bei der Rückverschiebebewegung der Heckscheibe 18′ erhalten. Durch die gebogenen Blattfederelemente 28′ wird der hier nicht dargestellte Stoff des Verdeckbezuges 3′ im Anordnungsbereich der Gewebefalten 23′ gleichzeitig auf Distanz zum unteren Teil des Scheibenrahmens 19′ gehalten.

## Patentansprüche

1. Faltverdeck (2, 2') für Fahrzeuge mit einer formstabilen Heckscheibe, (18, 18') die beim Öffnen des Verdecks (2, 2') aus einer aufgerichteten Gebrauchsstellung in eine abgelegte Nichtgebrauchsstellung herunterklappbar ist, mit einem die Heckscheibe (18, 18') einfassenden Verdeckbezug (3, 3'), der entlang der unteren Randseite der Heckscheibe (18, 18') sowie seitlich davon mit einem am unteren Abschluß des Verdecks angeordneten Stoffhaltebügel (8, 8') verbunden ist, und mit einer relativ zum Stoffhaltebügel (8, 8') nach hinten verschobenen Nichtgebrauchsstellung der Heckscheibe (18, 18'), zu deren Verschiebbarkeit die etwa parallel zur unteren Randseite der Heckscheibe (18, 18') verlaufende Anlenkachse querbeweglich angeordnet ist,
**dadurch gekennzeichnet**,
daß der Verdeckbezug (3, 3′) beidseitig der Heckscheibe (18, 18′) mit einer längenvariablen Gewebezone versehen ist, wobei die Gewebezonen beim Ablegen des Faltverdecks (2, 2′) durch die Rückverschiebung der Heckscheibe (18, 18′) auseinanderziehbar und beim Aufrichten des Faltverdecks (2, 2′) in die geschlossene Gebrauchsstellung auf ihre Ausgangslänge verkürzbar sind.

2. Faltverdeck nach Anspruch 1,
**dadurch gekennzeichnet**,
daß jede der längenvariablen Gewebezonen von einer Gewebefalte (23, 23′) des Verdeckbezuges (3, 3′) gebildet ist, die bei geschlossenem Faltverdeck (2, 2′) über Spannkräfte am Verdeckbezug (3, 3′) in einer gestrafften Überlappungsstellung gehalten ist.

3. Faltverdeck nach Anspruch 2,
**dadurch gekennzeichnet**,
daß die Gewebefalte (23, 23′) von einer Verbindungsnaht (24, 24′) zwischen einer Mittelbahn (3a, 3a′) und einer Seitenbahn (3b, 3b′) des Verdeckbezuges (3, 3′) ausgeht, welche im Bereich der Gewebefalte (23, 23′) gegenüber der ansonsten geraden Nahtlinie zurückspringt.

4. Faltverdeck nach Anspruch 3,
**dadurch gekennzeichnet,**
daß der Kniff der Gewebefalte (23, 23′) in einen Kniff eines Umschlages übergeht, zu dessen Bildung ein Randseitenbereich einer der miteinander vernähten Stoffbahnen (Mittelbahn 3a, Seitenbahn 3b′) umgeschlagen ist.

5. Faltverdeck nach Anspruch 1,
**dadurch gekennzeichnet,**
daß die querverschiebbare Anlenkachse von einem als Filmscharnier wirkenden Gewebestreifen (22, 22′) des Verdeckbezugs (3, 3′) selbst gebildet ist.

6. Faltverdeck nach Anspruch 1,
**dadurch gekennzeichnet,**
daß das Faltverdeck (2, 2′) in einem zugehörigen Verdeckkasten (11, 11′) versenkbar ist, wobei der Stoffhaltebügel (8, 8′) ein schwenkbares Gestellglied des Verdeckgestells ist.

7. Faltverdeck nach Anspruch 6,
**dadurch gekennzeichnet,**
daß der Verdeckbezug (3, 3′) auf der Unterseite des Stoffhaltebügels (8, 8′) befestigt ist und den formgebenden Umfang des Stoffhaltebügels (8, 8′) unbefestigt umschließt.

8. Faltverdeck nach Anspruch 1,
**dadurch gekennzeichnet**,
daß die Heckscheibe (18′) mittels eines Scheibenrahmens (19′) eingefaßt ist, dessen hinterer Rahmenteil im Zuge der Rückverschiebung der Heckscheibe (18′) auf dem Stoffhaltebügel (8′) gleitet, wobei zur Gleitabstützung des Rahmenteils auf der Außenfläche des Stoffhaltebügels (8′) eine Gleitmittelanordnung vorgesehen ist.

9. Faltverdeck nach Anspruch 8,
**dadurch gekennzeichnet**,
daß die Gleitmittelanordnung mehrere Gleiter (27′) umfaßt, die bezogen auf die Mitte der Heckscheibe (18′) seitlich versetzt an der Unterseite des Rahmenteils angebracht sind.

10. Faltverdeck nach Anspruch 9,
**dadurch gekennzeichnet**,
daß jeder Gleiter (27′) eine steife Tragschiene (27a′) umfaßt, die lösbar mit dem Rahmenteil des Scheibenrahmens (19′) verbindbar ist, und ein elastisch nachgiebiges Polsterelement trägt, das gleitend mit dem Stoffhaltebügel (8′) zusammenwirkt.

11. Faltverdeck nach Anspruch 10,
**dadurch gekennzeichnet,**
daß als Polsterelement ein weichelastomeres Strangpreßprofil (27b′) vorgesehen ist, das durch Aufschieben auf einen Haltesteg der Tragschiene (27a′) an dieser anbringbar ist.

12. Faltverdeck nach Anspruch 10,
**dadurch gekennzeichnet,**
daß der Scheibenrahmen (19′) der Heckscheibe (18′) mehrteilig ausgebildet ist, wobei entlang dem hinteren Rahmenteil mehrere Schraubverbindungsstellenfür die korrespondierenden Rahmenteile angeordnet sind, und daß die Schraubenverbindungsstellen des mehrteiligen Scheibenrahmens (19′) als Schraubbefestigungsstellen für die Tragschiene (27a′) der Gleiter (27′) mitgenutzt sind.

13. Faltverdeck nach Anspruch 2,
**dadurch gekennzeichnet**,
daß zur Abstützung der Querspannkräfte im Verdeckbezug (3′) an der Gewebefalte (23′) ein Blattfederelement (28′) vorhanden ist, das an einem Ende vom Scheibenrahmen (19′) der Heckscheibe (18′) und am anderen Ende vom Stoffhaltebügel (8′) gehalten ist, und das bei geschlossenem Faltverdeck (2′) in einer gespannten Strecklage festgelegt ist, in der es mit einer Längsseite stützend am Kniff der Gewebefalte (23′) anliegt.

14. Faltverdeck nach Anspruch 13,
**dadurch gekennzeichnet,**
daß ein unterer Endbereich des Blattfederelements (28′) hakenförmig gebogen ist und den hinteren Profilquerschnitt des Stoffhaltebügels (8′) nach Art einer Federklammer umgreift.

15. Faltverdeck nach Anspruch 13,
**dadurch gekennzeichnet**,
daß das obere Ende des Blattfederelements (28′) am Scheibenrahmen (19′) schraubbefestigt ist.

16. Faltverdeck nach Anspruch 15,
**dadurch gekennzeichnet,**
daß der Scheibenrahmen (19′) der Heckscheibe (18′) mehrteilig ausgebildet ist, wobei über den Umfang des Scheibenrahmens (19′) verteilt mehrere Schraubverbindungsstellen für die korrespondierenden Rahmenteile angeordnet sind, und daß der obere Schraubbefestigungspunkt des Blattfederelements (28′) ein Schraubverbindungspunkt des Scheibenrahmens (19′) ist.

## Claims

1. Folding hood (2, 2') for motor vehicles having a dimensionally stable rear window (18, 18') which, when the hood (2, 2') is opened, can be folded down from an upright position of use into a flat position of non-use, having a hood cover (3, 3') which encloses the rear window and is connected, along the lower edge side of the rear window (18, 18') and laterally thereto, to a material retaining hoop (8, 8') arranged at the lower termination of the hood, and having a position of non-use of the rear window (18, 18') which is displaced rearwards relative to the material retaining hoop (8, 8'), the axis of articulation extending approximately parallel to the lower edge side of the rear window (18, 18') being transversely displaceable to ensure the displaceability thereof, characterised in that the hood cover (3, 3') is provided with a fabric zone of variable length on each side of the rear window (18, 18'), the fabric zones being capable of being drawn apart by the rearward displacement of the rear window (18, 18') when the folding hood (2, 2') is laid flat, and being capable of being shortened to their initial length when the folding hood (2, 2') is erected into its closed position of use.

2. Folding hood according to Claim 1, characterised in that each of the fabric zones of variable length is formed by a fabric fold (23, 23') of the hood cover (3, 3'), these fabric folds being retained in a tightened overlapping position on the hood cover (3, 3') by means of tensile forces when the folding hood (2, 2') is closed.

3. Folding hood according to Claim 2, characterised in that the fabric fold (23, 23') starts from a connecting seam (24, 24') between a central web (3a, 3a') and a lateral web (3b, 3b') of the hood cover (3, 3'), which lateral web projects rearwards relative to the otherwise straight line of the seam in the region of the fabric fold (23, 23').

4. Folding hood according to Claim 3, characterised in that the crease of the fabric fold (23, 23') merges into a crease of a turnover, for the formation of which a lateral edge region of one of the stitched-together material webs (central web 3a, lateral web 3b') is folded over.

5. Folding hood according to Claim 1, characterised in that the transversely displaceable axis of articulation is formed by a fabric strip (22, 22') of the hood cover (3, 3') itself, which acts as a film hinge.

6. Folding hood according to Claim 1, characterised in that the folding hood (2, 2') can be retracted into an assigned hood box (11, 11'), the material retaining hoop (8, 8') being a pivotable frame member of the hood frame.

7. Folding hood according to Claim 6, characterised in that the hood cover (3, 3') is fixed from the underside of the material retaining hoop (8, 8') and encloses, without fixing, the shaping circumference of the material retaining hoop (8, 8').

8. Folding hood according to Claim 1, characterised in that the rear window (18') is enclosed by a window frame (19') whose rear frame part slides, during the rearward displacement of the rear window (18') on the material retaining hoop (8'), an arrangement of sliding means being provided for the sliding support of the frame part on the outer surface of the material retaining hoop (8').

9. Folding hood according to Claim 8, characterised in that the arrangement of sliding means comprises a plurality of slides (27') which are attached to the under-side of the frame part, laterally offset relative to the centre of the rear window (18').

10. Folding hood according to Claim 9, characterised in that each slide (27') comprises a rigid mounting rail (27a'), which can be detachably connected to the frame part of the window frame (19'), and supports an elastically resilient padding element which interacts slidingly with the material retaining hoop (8').

11. Folding hood according to Claim 10, characterised in that a soft elastomeric extruded section (27b') is provided as a padding element and can be attached to the mounting rail (27a') by being pushed onto a retaining web of the latter.

12. Folding hood according to Claim 10, characterised in that the window frame (19') of the rear window (18') is of multi-part design, a plurality of screw connection points for the corresponding frame parts being arranged along the rear frame part, and in that the screw connection points of the multi-part window frame (19') are additionally used as screw fixing points for the mounting rail (27a') of the slides (27').

13. Folding hood according to Claim 2, characterised in that a leaf spring element (28') is provided to support the transverse tensile forces in the hood cover (3') at the fabric fold (23'), and is retained at one end by the window frame (19') of the rear window (18') and the other end by the material retaining hoop (8'), and which, when the folding hood (2') is closed, is fixed in a stressed extended position in which it bears supportingly, with one long side, on the crease of the fabric fold (23').

14. Folding hood according to Claim 13, characterised in that a lower end region of the leaf spring element (28') is bent in the form of a hook and engages around the rear profile cross section of the material retaining hoop (8') in the manner of the spring clip.

15. Folding hood according to Claim 13, characterised in that the upper end of the leaf spring element (28') is fixed to the window frame (19') by screwing.

16. Folding hood according to Claim 15, characterised in that the window frame (19') of the rear window (18') is of multi-part design, a plurality of screw connection points for the corresponding frame parts being arranged over the periphery of the window frame (19'), and in that the upper screw fixing point of the leaf spring element (28') is a screw connection point for the window frame (19').

## Revendications

1. Capote (2, 2') destinée à des véhicules et comportant une lunette arrière (18, 18') de forme stable et qui, à l'ouverture de la capote (2, 2'), est rabattable à partir d'une position d'utilisation relevée à une position de non-utilisation rabattue, un revêtement de capote (3, 3') dans lequel est incorporée la lunette arrière (18, 18'), revêtement qui est relié le long du bord inférieur de la lunette arrière (18, 18'), ainsi que latéralement par rapport à cette lunette, à un étrier (8, 8') de maintien d'étoffe disposé à la terminaison inférieure de la capote, laquelle présente une position de non-utilisation de la lunette arrière (18, 18') dans laquelle cette lunette est déplacée vers l'arrière par rapport à l `étrier (8, 8') de maintien de l'étoffe, le déplacement vers l'arrière de la lunette étant rendu possible par un axe d'attache et d'articulation s'étendant à peu près parallèlement au bord inférieur de la lunette arrière (18, 18') et mobile transversalement à lui-même, caractérisée en ce que le revêtement (3, 3') de la capote est pourvu, des deux côtés de la lunette arrière (18, 18'), d'une zone de tissu ayant une longueur variable, ces zones de tissu étant extensibles par le déplacement vers l'arrière de la lunette lors du rabattement de la capote et raccourcissables à leur longueur initiale lors du relèvement de la capote (2, 2') à la position d'utilisation déployée.

2. Capote selon la revendication 1, caractérisée en ce que chacune des zones de tissu de longueur variable est formée par un pli de tissu (23, 23') du revêtement (3, 3') de la capote, pli qui, lorsque la capote (2, 2') est déployée, est maintenu en une position tendue de recouvrement ou de fermeture par des forces de tension agissant sur le revêtement (3, 3') de la capote.

3. Capote selon la revendication 2, caractérisée en ce que le pli de tissu (23, 23') s'étend à partir d'une couture d'assemblage (24, 24') entre une laize centrale (3a, 3a') et une laize latérale (3b, 3b') du revêtement (3, 3') de la capote, couture qui, dans la zone du pli de tissu (23, 23'), s'étend en retrait par rapport à la ligne générale, par ailleurs rectiligne, de la couture.

4. Capote selon la revendication 3, caractérisé en ce que le bord du pli de tissu (23, 23') se raccorde à un bord constitué par un rabat pour la formation duquel une zone latérale marginale d'une des laizes d'étoffe cousues ensemble (laize centrale 3a, laize latérale 3b') est rabattue.

5. Capote selon la revendication 1, caractérisée en ce que l'axe d'attache et d'articulation, mobile transversalement à lui-même, est formé par une bande de tissu (22, 22') du revêtement de capote (3, 3') lui-même, bande de tissu qui agit comme une couche flexible formant charnière.

6. Capote selon la revendication 1, caractérisée en ce qu'elle (2, 2') est escamotable dans un coffre (11, 11') coordonné, l'étrier de maintien de l'étoffe (8, 8') étant un élément basculant de la carcasse de la capote.

7. Capote selon la revendication 6, caractérisée en ce que son revêtement (3, 3') est fixé sur le dessous de l'étrier de maintien de l'étoffe (8, 8') et entoure, sans y être fixé, la périphérie, ayant une fonction de mise en forme, de cet étrier.

8. Capote selon la revendication 1, caractérisée en ce que la lunette arrière (18') est incorporée dans le revêtement au moyen d'un encadrement (19') dont la partie arrière glisse sur l'étrier de maintien de l'étoffe (8') au cours du déplacement vers l'arrière de la lunette (18'), un dispositif de moyens de glissement étant prévu sur la surface extérieure de l'étrier (8') pour supporter et permettre le glissement de cette partie d'encadrement.

9. Capote selon la revendication 8, caractérisée en ce que le dispositif de moyens de glissement comprend plusieurs coulisseaux (27') agencés avec un décalage latéral par rapport au milieu de la lunette arrière (18') sur le côté inférieur de la partie d'encadrement.

10. Capote selon la revendication 9, caractérisée en ce que chaque coulisseau (27') comprend un rail porteur rigide (27a') pouvant être relié de façon amovible à ladite partie de l'encadrement (19') de la lunette et portant un élément de rembourrage élastique qui coopère avec l'étrier de maintien d'étoffe (8') en glissant sur lui.

11. Capote selon la revdndication 10, caractérisée en ce que l'élément de rembourrage est un profilé extrudé (26b') en élastomère souple, qui peut être mis en place sur le rail porteur (27a') par son enfilage sur une nervure de support de ce rail.

12. Capote selon la revendication 10, caractérisée en ce que l'encadrement (19') de la lunette arrière (18') est en plusieurs parties, avec disposition le long de la partie arrière de l'encadrement de plusieurs points d'assemblage vissé pour les parties d'encadrement correspondantes, et que les points d'assemblage vissé de l'encadrement (19') en plusieurs parties sont utilisés en même temps comme points de fixation par vis pour le rail porteur (27a') des coulisseaux (27').

13. Capote selon la revendication 2, caractérisée en ce que, pour soutenir les forces de tension transversale dans le revêtement (3') de la capote, un ressort plat (28') est prévu sur chaque pli de tissu (23'), ressort qui est maintenu en place à une extrémité par l'encadrement (19') de la lunette arrière (18') et à l'autre extrémité par l'étrier de maintien de l'étoffe (8') et qui, lorsque la capote (2') est déployée, est immobilisé en une position tendue d'extension dans laquelle il s'applique par un côté longitudinal contre le bord du pli de tissu (23') en le soutenant.

14. Capote selon la revendication 13, caractérisée en ce qu'une portion terminale inférieure du ressort plat (28') est recourbée en forme de crochet et entoure à la façon d'une agrafe élastique la partie arrière du profilé formant l'étrier de maintien de l'étoffe (8').

15. Capote selon la revendication 13, caractérisée en ce que l'extrémité supérieure du ressort plat (28') est fixée par vis à l'encadrement (19') de la lunette.

16. Capote selon la revendication 15, caractérisée en ce que l'encadrement (19') de la lunette arrière (18') est réalisé en plusieurs parties, avec disposition de plusieurs points d'assemblage vissé, répartis sur la périphérie de l'encadrement (19'), pour les parties correspondantes de l'encadrement, et que le point supérieur de fixation par vis du ressort plat (28') est un point d'assemblage vissé de l'encadrement (19').
